# EUROPÄISCHE PATENTSCHRIFT

(11) **EP 3 098 065 B1**
(45) Veröffentlichungstag und Bekanntmachung des Hinweises auf die Patenterteilung: **05.08.2020**
(21) Anmeldenummer: 16153738.6
(22) Anmeldetag: 02.02.2016
(51) Int. Cl.: B29D 30/48

(54) **APPLIKATIONSVORRICHTUNG ZUM ERSTELLEN EINES APEX UND ZUM APPLIZIEREN DES APEX AUF EINEN WULSTKERN**
APPLICATION DEVICE FOR PRODUCING AN APEX AND FOR APPLYING THE APEX TO A BEAD CORE
DISPOSITIF D'APPLICATION POUR LA RÉALISATION D'UN APEX ET POUR L'APPLICATION DE L'APEX SUR UN TRINGLE A BOURRELET

(30) Priorität: 29.05.2015 DE 102015209872
(43) Veröffentlichungstag der Anmeldung: 30.11.2016
(73) Patentinhaber: Continental Reifen Deutschland GmbH, 30165 Hannover (DE)
(72) Erfinder: Koch, Tim, 30171 Hannover (DE); Berger, Markus, 31319 Sehnde (DE); Wegner, Denis, 30419 Hannover (DE); Jurena, Lukas, 76363 Halenkovice (CZ)
(74) Vertreter: Widjaja, Wira

(56) Entgegenhaltungen:
- WO-A1-2014/112065
- DE-A1-102005 006 076
- JP-A- H06 190 946
- JP-A- 2004 066 568
- US-A- 4 547 251

## Beschreibung

Die Erfindung betrifft eine Applikationsvorrichtung zum Erstellen eines ringförmigen Apex aus einer abgelängten Kautschukmischungsbahn und zum Applizieren des Apex auf einen unterhalb der Vorrichtung positionierten ringförmigen Wulstkern, mit einer in vertikaler Richtung verlaufenden zentralen Drehachse und einer bezüglich dieser Drehachse zylindrischen Auflagefläche aus einer Vielzahl von Applikationssegmenten, wobei die Applikationssegmente Bestandteile von um die Drehachse der Applikationsvorrichtung rotationssymmetrisch angeordneten Koppelgetrieben sind, welche sämtlich gleichzeitig derart betätigbar sind, dass die Applikationssegmente zum Applizieren des aufgewickelten und gespleißten Apex in Richtung des unterhalb der Vorrichtung positionierten Wulstkerns um bis zu 90° kippbar sind.

Eine Applikationsvorrichtung der eingangs genannten Art ist beispielsweise aus der JP 2004 066 568 A bekannt. Bei dieser Vorrichtung sind an jedem Applikationssegment eine erste und eine zweite Koppelstange angelenkt. Die ersten Koppelstangen sind an ihren dem jeweiligen Applikationssegment abgewandten Enden in schienartigen Führungen eines konisch gestalteten Basisteils verschiebbar gelagert. An ihrem schienenseitigen Ende ist jede erste Koppelstange mit einer dritten Koppelstange verbunden, über welche eine lineare Bewegung eines Antriebselementes auf die erste Koppelstange übertragbar ist. Die am Applikationssegment angeordneten zweiten Koppelstangen verbinden das jeweilige Applikationssegment mit einer Kippeinrichtung. Nach dem Aufwickeln eines Apexes auf den Applikationssegmenten wird das Antriebselement in Richtung Wulstkern verfahren, wodurch über die ersten Koppelstangen in den Führungen bewegt werden. Die zweiten Koppelstangen Kippen bei dieser Bewegung die Applikationssegmente derart, dass der Apex auf den Wulstkern abgeworfen wird. Diese bekannte Vorrichtung gestattet das Applizieren von Apexen eines bestimmten Durchmessers. Die Konstruktion der Koppelgetriebe sowie die konische Gestalt des Basisteils bedingen einen großen Bauraum der Applikationsvorrichtung.

Aus der DE 10 2005 006 076 A1 ist eine weitere Applikationsvorrichtung bekannt, deren Applikationssegmente um einen einzigen Drehpunkt schwenkbar, aber ansonsten nicht weiter verfahrbar sind.

Bei der Fertigung von Fahrzeugluftreifen ist es üblich, sogenannte Fertigkerne, bestehend aus einem Wulstkern und einem Apex (Kernprofil), in einem Zwischenschritt herzustellen, um beim Aufbau des Rohreifens bereits vorgefertigte Kernpakete auf der Reifenaufbautrommel positionieren zu können. Die Apexe werden je nach Reifentyp und Dimension des zu fertigenden Reifens in bestimmten Apexhöhen von 10 mm bis etwa 100 mm hergestellt. Zum Positionieren von Apexen mit einer Höhe ab etwa 65 mm auf einem Wulstkern ist es erforderlich, den Apex in einem Zwischenschritt auf einer Applikationstrommel aufzuwickeln. Die bekannten Applikationstrommeln sind entweder mit klappbaren Umfangssegmenten oder mit einem aufblähbaren Balg ausgestattet, um den Apex auf dem Wulstkern zu positionieren können. Die gängigen Applikationstrommeln sind ferner jeweils zur Herstellung von Apexen einer bestimmten Zollgröße (Durchmesser) einsetzbar. Für jede Reifendimension muss daher eine separate Applikationstrommel verwendet werden, wodurch hohe Werkzeug- und Umrüstungskosten entstehen.

Der Erfindung liegt die Aufgabe zu Grunde, eine Applikationsvorrichtung zur Verfügung zu stellen, auf welcher Apexe unterschiedlicher Zollgrößen aufgewickelt werden können und auf entsprechend dimensionierten Wulstkernen positioniert werden können, wobei die Applikationsvorrichtung einen geringen Bauraum beanspruchen soll.

Gelöst wird die gestellte Aufgabe erfindungsgemäß dadurch, dass die Applikationssegmente auch gleichzeitig derart betätigbar sind, dass der Durchmesser der von den Applikationssegmenten gebildeten Auflagefläche in einem Durchmesserbereich veränderbar ist, wobei zur Betätigung der Koppelgetriebe zwei voneinander unabhängig auf bzw. gegenüber der zentralen Drehachse verschiebbare erste und zweite Hohlwellen vorgesehen sind, welche mit den Koppelgetrieben gelenkig verbunden sind.

Durch das Anordnen der Applikationssegmente auf einer Vielzahl von Koppelgetrieben kann eine Applikationsvorrichtung mit kleinem Bauraum realisiert werden, auf welcher sich Apexe unterschiedlicher Durchmesser durch Verstellen der Koppelgetriebe aufbringen lassen und mit welcher vorteilhafterweise der jeweils aufgewickelte Apex durch Betätigen der Koppelgetriebe auf dem Wulstkern appliziert werden kann. Mittels der zwei Hohlwellen lassen sich sämtliche Koppelgetriebe gleichzeitig in der jeweils erwünschten Weise mit geringem baulichem Aufwand betätigen.

Dabei ist die zentrale Drehachse erfindungsgemäß die Drehachse eines drehbar angeordneten Gestells, auf welchem die Hohlwellen verschiebbar gelagert sind. Das Drehen des Gestells mitsamt den Koppelgetrieben gestattet das Applizieren der Apex-Materialbahn auf den Applikationssegmenten durch einfaches Drehen des Gestells.

Bei einer besonders kompakten Ausführung der Applikationsvorrichtung weisen die Hohlwellen Anlenkstellen für die Koppelgetriebe auf, wobei sich die sich die Anlenkstellen der zweiten Hohlwelle oberhalb der Anlenkstellen der ersten Hohlwelle befinden.

Die im Rahmen der Erfindung eingesetzten Koppelgetriebe weisen jeweils erste und zweite kürzere und erste und zweite längere, in Parallelogrammform miteinander gelenkig verbundene Koppelstangen auf, wobei die Applikationssegmente jeweils auf den zweiten kürzeren Koppelstangen befestigt sind. Dadurch sind die Koppelgetriebe in eine Stellung bringbar, in welcher die Apex-Materialbahn auf die Applikationssegmente aufgewickelt werden kann, und auch in eine Stellung bringbar, in welcher der Apex auf dem unterhalb der Applikationsvorrichtung bereits befindlichen Wulstkern positioniert werden kann.

Die Koppelgetriebe lassen sich durch entsprechende Betätigung der Hohlwellen derart bewegen, dass in jener Stellung der Koppelgetriebe, in welcher ein Apex mit dem kleinstmöglichen Durchmesser erstellbar ist, die erste längere und die erste kürzere Koppelstange näher zur Drehachse verlaufen als die zweite längere und die zweite kürzere Koppelstange.

Eine besondere Verbindung der Koppelgetriebe mit den beiden Hohlwellen gestattet die erwünschte Betätigung der Koppelgetriebe auf besonders zweckmäßige Weise. Insbesondere ist das zwischen der ersten kürzeren Koppelstange und der ersten längeren Koppelstange befindliche Gelenk mit der ersten Hohlwelle gelenkig verbunden und es ist vorzugsweise die erste längere Koppelstange mit einer fünften Koppelstange gelenkig verbunden, welche unterhalb der Hohlwellen mit dem Gestell gelenkig verbunden ist. Erfindungsgemäß ist ferner die erste kürzere Koppelstange mit einer sechsten Koppelstange gelenkig verbunden, welche mit der zweiten Hohlwelle gelenkig verbunden ist. Dabei sind weiters die fünfte und die sechste Koppelstange jeweils etwa mittig an den jeweiligen Koppelstangen des parallelogrammförmigen Teiles des Koppelgetriebes angelenkt.

Weitere Merkmale, Vorteile und Einzelheiten der Erfindung werden nun anhand der Zeichnung, die ein Ausführungsbeispiel der Erfindung darstellt, näher beschrieben. Dabei zeigen
Fig. 1 eine Gesamtansicht einer erfindungsgemäßen Applikationsvorrichtung und
Fig. 2 bis 5 Längsschnitte der Applikationsvorrichtung aus Fig. 1 in unterschiedlichen Stellungen.

In der nachfolgenden Beschreibung beziehen sich Begriffe wie "senkrecht", "waagrecht", "oben", "unten" und dergleichen auf die Darstellungen der Applikationsvorrichtung, die gemäß diesen Darstellungen in einer Anlage zur automatischen Herstellung von Fertigkernen verwendet wird.

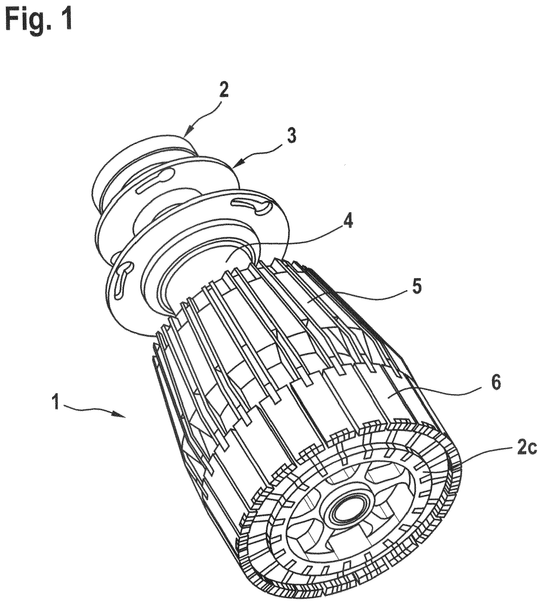

Die Hauptbestandteile der in den Figuren dargestellten Applikationsvorrichtung 1 sind ein Gestell 2, eine innere, erste Hohlwelle 3, eine äußere, zweite Hohlwelle 4 und eine Vielzahl von übereinstimmend ausgeführten Koppelgetrieben 5. Die über den Umfang der Applikationsvorrichtung 1 in einer Anzahl von beispielsweise 20 bis 30 Stück angeordneten Koppelgetriebe 5 weisen jeweils ein Applikationssegment 6 auf, wobei sämtliche Applikationssegmente 6 in der in Fig. 1 beispielhaft gezeigten Betriebsstellung zum Aufwickeln eines Apex eine am unteren Endbereich der Applikationsvorrichtung 1 ringförmig umlaufende, im Wesentlichen zylindrische Auflage bilden. In dieser Betriebsstellung wird die aus einer Kautschukmischung hergestellte Materialbahn für den betreffenden Apex auf die Applikationssegmente 6 aufgewickelt, gespleißt und anschließend auf noch zu beschreibende Weise auf einem unterhalb der Applikationsvorrichtung 1 ausgerichteten und positionierten, in den Figuren nicht dargestellten Wulstkern appliziert.

Hauptbestandteil des Gestells 2 ist ein langgestreckter, senkrecht verlaufender, zylindrischer Mittelteil 2b, dessen oberes Ende einen Befestigungsteil 2a zum Anordnen bzw. Befestigen der Applikationsvorrichtung 1 an einem nicht gezeigten Anlagenteil aufweist, mittels welchem die Applikationsvorrichtung 1 in Drehbewegung versetzbar ist. Die zentrale, vertikal verlaufende Achse des Gestells 2 bildet die Drehachse a für die Drehbewegung. Das untere Ende des Mittelteils 2b trägt einen waagrecht positionierten, vorzugsweise ringförmigen Halteteil 2c, an welchem in noch zu beschreibender Weise die Koppelgetriebe 5 angelenkt sind. Die Abmessungen des Halteteiles 2c und der Koppelgetriebe 5 sind derart aufeinander abgestimmt, dass in der am weitesten zusammengeklappten Applikationsstellung der Koppelgetriebe 5 beispielsweise Apexe mit einem Durchmesser von 12 Zoll, in der größtmöglichen Applikationsstellung Apexe mit einem Durchmesser von 20 Zoll auf den Applikationssegmenten 6 erstellbar sind.

Die innere, erste Hohlwelle 3 sitzt unmittelbar auf dem Mittelteil 2b des Gestells 2 und ist in vertikaler Richtung gegenüber dem Mittelteil 2b zwischen einer oberen Endstellung, die durch einen ersten, oberen Anschlag 7a am oberen Endbereich des Mittelteils 2b bestimmt ist, und einer unteren Endstellung, die durch einen zweiten, unteren Anschlag 7b am unteren Endbereich des Mittelteils 2b bestimmt ist, verschiebbar. Auf der inneren, ersten Hohlwelle 3 sitzt die äußere, zweite Hohlwelle 4, welche gegenüber der inneren, ersten Hohlwelle ebenfalls in vertikaler Richtung verschiebbar ist. Die innere, erste Hohlwelle 3 weist einen langgestreckten Mittelteil 3b auf, auf welchem die äußere, zweite Hohlwelle 4 verschiebbar gelagert ist, wobei am unteren Ende des Mittelteils 3b ein beispielsweise kreisförmiger oder kreisringförmiger Halteteil 3c angeordnet ist, mit welchem die Koppelgetriebe 5, wie noch beschrieben wird, ebenfalls gelenkig verbunden sind. Bei der gezeigten Ausführungsform befinden sich die Anlenkstellen der Koppelgetriebe 5 am Halteteil 2c des Gestells 2 zumindest im Wesentlichen auf dem gleichen Durchmesser wie die Anlenkstellen der Koppelgetriebe 5 am Halteteil 3c. Die äußere, zweite Hohlwelle 4 weist einen weiteren, beispielsweise kreisringförmigen Halteteil 4c auf, mit welchem die Koppelgetriebe 5 ebenfalls gelenkig verbunden sind.

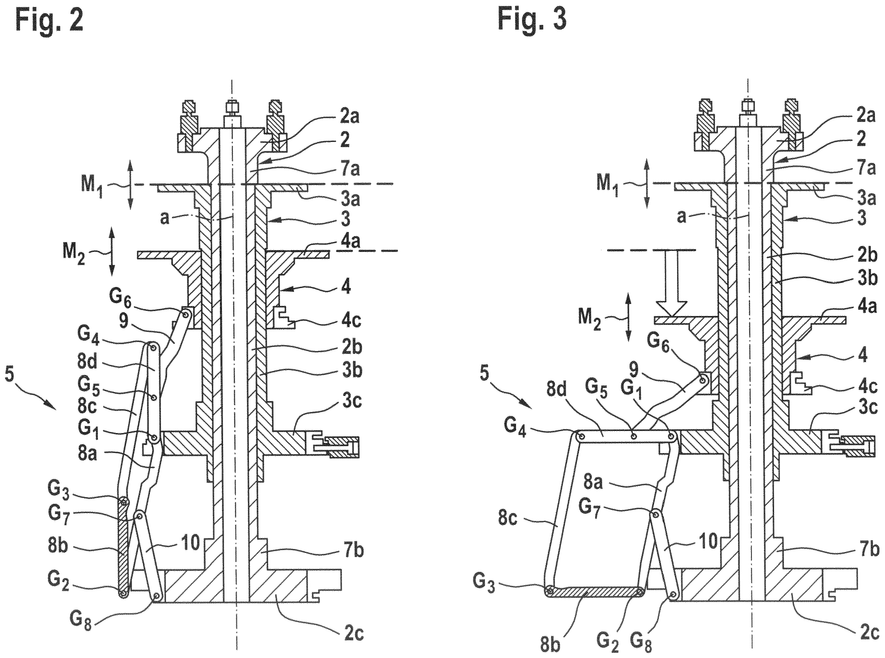

An den oberen Endbereichen der Hohlwellen 3 und 4 befinden sich beispielsweise kreisringförmige Aufnahmeteile 3a und 4a, über welche die Hohlwellen 3, 4 auf nicht dargestellte Weise mittels Antrieben in Bewegung versetzbar sind. Die in Fig. 2 mit M₁ und M₂ bezeichneten Doppelpfeile symbolisieren die Antriebe zur voneinander unabhängigen Bewegung der Hohlwellen 3 und 4.

Die Koppelgetriebe 5 sind um die Drehachse a der Applikationsvorrichtung 1 im Wesentlichen rotationssymmetrisch und in gleichen Abständen zueinander angeordnet. Jedes Koppelgetriebe 5 befindet sich im Wesentlichen in einer von der Drehachse a und dem Radius der zylindrischen Auflagefläche aufgespannten Ebene. Bei jedem Koppelgetriebe 5 sind vier miteinander über Drehgelenke G₁ bis G₄ miteinander verbundene Koppelstangen 8a, 8b, 8c und 8d in der Form eines Parallelogramms aneinander gekoppelt, wobei jeweils zwei Koppelstangen, die Koppelstangen 8a und 8c sowie die Koppelstangen 8b und 8d, in jeder möglichen Lage des Koppelgetriebes 5 parallel zueinander verlaufen und die Koppelstangen 8a und 8c eine Länge aufweisen, die größer ist als die Länge der Koppelstangen 8b und 8d und bis zum 1,5-Fachen der Länge der Koppelstangen 8b und 8d beträgt. Das eine, die kürzere Koppelstange 8d mit der längeren Koppelstange 8a verbindende Gelenk G₁ ist am Halteteil 3c der inneren Hohlwelle 3 angelenkt. Die am Gelenk G₁ angelenkte kürzere Koppelstange 8d ist etwa mittig mittels eines weiteren Gelenkes G₅ mit einer fünften Koppelstange 9 verbunden, die ihrerseits am Halteteil 4c der äußeren, zweiten Hohlwelle 4 mittels eines weiteren Gelenkes G₆ angelenkt ist. Die am Gelenk G₁ angelenkte längere Koppelstange 8a ist mittig mit einer sechsten Koppelstange 10 über ein weiteres Gelenk G₇ verbunden, das zweite Ende der Koppelstange 10 ist über ein Gelenk G₈ mit dem Halteteil 2c des Gestells 2 gelenkig verbunden. Das Gelenk G₈ ist somit ein Festlager und ändert seine Lage während des Betriebes bzw. der Betätigung der Applikationsvorrichtung 1 nicht. Die Gelenke G₁ und G₆, welche mit den Hohlwellen 3 bzw. 4 verbunden sind, sind jene, über die sämtliche Koppelstangen 8a, 8b, 8c, 8d, 9 und 10 in Bewegung versetzt werden können. Die über das Gelenk G₃ mit der längeren Koppelstange 8c verbundene kürzere Koppelstange 8b ist jene, auf welcher das Applikationssegment 6 befestigt ist.

Fig. 2 zeigt jene Betriebsstellung der Applikationsvorrichtung 1, in welcher Apexe mit dem kleinstmöglichen Durchmesser appliziert werden können. Die beiden kürzeren Koppelstangen 8b und 8d des parallelogrammförmigen Teils des Koppelgetriebes 5 verlaufen parallel zur zentralen Achse des Gestells 2 und schließen mit den längeren Koppelstangen 8a und 8c sehr kleine spitze Winkel ein, das Koppelgetriebe 5 befindet sich in der am weitesten zusammengeklappten Stellung. Der Abstand des Gelenkes G₂ von der zentralen Achse des Gestells 2 ist der kleinstmögliche und bestimmt, mit welchem kleinsten Durchmesser ein Apex auf der Applikationsvorrichtung 1 erstellt werden kann. In dieser Betriebsstellung befindet sich die innere, erste Hohlwelle 3 am ersten, oberen Anschlag 7a, die äußere, zweite Hohlwelle 4 in ihrer am weitesten oben befindlichen Stellung. Zum Erstellen eines ringförmigen Apex wird das bereits abgelängte Materialbahnstück bei in Drehbewegung versetzter Applikationsvorrichtung auf die Applikationssegmente 6 aufgebracht, die Enden der Materialbahn werden stumpf gespleißt und der derart erstellte ringförmige Apex wird auf den bereits unterhalb der Applikationsvorrichtung 1 in Position gebrachten Wulstkern gesetzt. Dazu wird bei unveränderter Lage der inneren, ersten Hohlwelle 3 die äußere, zweite Hohlwelle 4 mittels ihres Antriebes M₂ nach unten verfahren. Die Koppelstange 9 überträgt diese Bewegung über die Gelenke G₆ und G₄ auf den parallelogrammförmigen Teil des Koppelgetriebes 5, deren Koppelstangen 8a, 8b, 8c, 8d unter "Aufrichten" des Parallelogrammes zwangsweise der Bewegung folgen müssen, wobei die Verfahrbewegung der Hohlwelle 4 gestoppt wird, sobald die Applikationssegmente 6 im rechten Winkel zur zentralen Achse des Gestells 2 orientiert sind. Während dieser Bewegung erfolgt ein Abwerfen des ringförmigen Apex von den Applikationssegmenten 6 und ein Positionieren desselben auf dem nicht gezeigten Wulstkern.

Um einen Apex einer anderen, größeren Zollgröße zu applizieren, wird die Applikationsvorrichtung 1 zunächst auf den entsprechenden Durchmesser eingestellt. Die äußere, zweite Hohlwelle 4 verbleibt in ihrer Ausgangsposition gegenüber der inneren, ersten Hohlwelle 3, welche mittels des Antriebes M₁ nach unten verfahren wird. Das Verfahren der inneren, ersten Hohlwelle 3 bewirkt über die Zwangskinematik der Gelenke G₁, G₈ und G₇ ein "Aufrichten" des paralellogrammförmigen Teiles des Koppelgetriebes 5, wobei die Koppelstange 8d ihre Lage relativ zu den Hohlwellen 3 und 4 behält und sich der Abstand zwischen den beiden jeweils parallel zueinander verlaufenden kürzeren und längeren Koppelstangen 8b und 8d sowie 8a und 8c vergrößert.

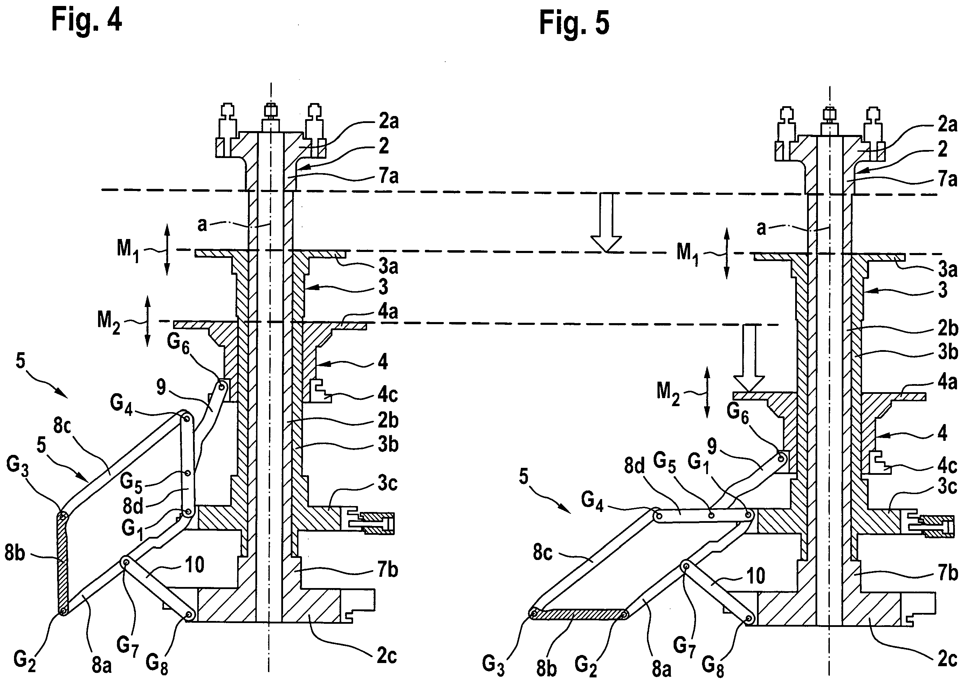

Fig. 4 zeigt die Einstellung mit dem größtmöglichen Durchmessers der Applikationsvorrichtung 1, die Applikationssegmente 6 befinden sich im größtmöglichen Abstand von der zentralen Achse a des Gestells 2, die innere, erste Hohlwelle 3 ist bis zum zweiten, unteren Anschlag 7b verfahren. In dieser Betriebsstellung kann nun ein Apex mit dem größtmöglichen Durchmesser aufgewickelt und gespleißt werden. Zum Positionieren des Apex auf dem mit entsprechendem Durchmesser bereits vorpositionierten Wulstkern wird die äußere, zweite Hohlwelle 4 gegenüber der in ihrer Position verbleibenden inneren, ersten Hohlwelle 3 nach unten verfahren. Über die mit der Hohlwelle 3 gelenkig verbundene Koppelstange 9, welche am parallelogrammförmigen Teil des Koppelgetriebes 5 angelenkt ist, wird der parallelogrammförmige Teil durch die vorliegenden kinematischen Zwangsbedingungen "gekippt", bis die Applikationssegmente 6 senkrecht zur zentralen Achse des Gestells 2 verlaufen (Fig. 5) und der Apex abgeworfen und auf dem Wulstkern positioniert ist.

Die Figuren 2 bis 5 zeigen jene Betriebsstellungen der Applikationsvorrichtung 1, die zum Erstellen und Abgeben eines Apex mit dem kleinstmöglichen und eines Apex mit dem größtmöglichen Durchmesser verwendet werden. Selbstverständlich ist es möglich, die Applikationsvorrichtung 1 auf Werte zwischen diesen beiden Extremwerten einzustellen und Apexe mit dazwischen liegenden Durchmessern zu fertigen. Die Applikationsvorrichtung 1 ist ferner Bestandteil einer vollautomatisch ablaufenden Fertigkernfertigung und ist daher entsprechend in den vollautomatischen Ablauf eingebunden.

Die Erfindung ist auf das dargestellte und beschriebene Ausführungsbeispiel nicht eingeschränkt. Insbesondere ist es möglich, die Hohlwellen am Gestell übereinander anzuordnen.

### Bezugsziffernliste

- 1 .......................: Applikationsvorrichtung
- 2 .......................: Gestell
- 2a .....................: Halteteil
- 2b .....................: Mittelteil
- 2c .....................: Befestigungsteil
- 3 .......................: Hohlwelle
- 3a .....................: Aufnahmeteil
- 3b .....................: Mittelteil
- 3c .....................: Halteteil
- 4 .......................: Hohlwelle
- 4a .....................: Aufnahmeteil
- 4c .....................: Halteteil
- 5 .......................: Koppelgetriebe
- 6 .......................: Applikationssegment
- 7a, 7b ...............: Anschlag
- 8a, 8b, 8c, 8d ...: Koppelstange
- 9, 10 .................: Koppelstange
- a .......................: Drehachse
- G₁ bis G₈ ..........: Drehgelenk
- M₁, M₂ .............: Antrieb

## Patentansprüche

1. Applikationsvorrichtung (1) zum Erstellen eines ringförmigen Apex aus einer abgelängten Kautschukmischungsbahn und zum Applizieren des Apex auf einen unterhalb der Vorrichtung positionierten ringförmigen Wulstkern, mit einer in vertikaler Richtung verlaufenden zentralen Drehachse (a) und einer bezüglich dieser Drehachse (a) zylindrischen Auflagefläche aus einer Vielzahl von Applikationssegmenten (6),
wobei die Applikationssegmente (6) Bestandteile von um die Drehachse (a) der Applikationsvorrichtung (1) rotationssymmetrisch angeordneten Koppelgetrieben (5) sind, welche sämtlich gleichzeitig derart betätigbar sind, dass die Applikationssegmente (6) zum Applizieren des aufgewickelten und gespleißten Apex in Richtung des unterhalb der Vorrichtung positionierten Wulstkerns um bis zu 90° kippbar sind,
**dadurch gekennzeichnet,**
**dass** die Applikationssegmente (6) auch gleichzeitig derart betätigbar sind, dass der Durchmesser der von den Applikationssegmenten (6) gebildeten Auflagefläche in einem Durchmesserbereich veränderbar ist,
wobei zur Betätigung der Koppelgetriebe (5) zwei voneinander unabhängig auf bzw. gegenüber der zentralen Drehachse (a) verschiebbare erste und zweite Hohlwellen (3, 4), eine innere erste Hohlwelle (3) und eine äußere zweite Hohlwelle (4), vorgesehen sind, welche mit den Koppelgetrieben gelenkig verbunden sind.

2. Applikationsvorrichtung (1) nach Anspruch 1, **dadurch gekennzeichnet, dass** zur Veränderung des Durchmessers der Applikationssegmente (6) die äußere, zweite Hohlwelle (4) in ihrer Ausgangsposition gegenüber der inneren, ersten Hohlwelle (3) verbleibt, welche mittels eines Antriebes (M₁) verfahren wird.

3. Applikationsvorrichtung (1) nach Anspruch 1 oder 2, **dadurch gekennzeichnet, dass** die zentrale Drehachse (a) die Drehachse eines drehbar angeordneten Gestells (2) ist, auf welchem die Hohlwellen (3, 4) verschiebbar gelagert sind.

4. Applikationsvorrichtung (1) nach einem der Ansprüche 1 bis 3, **dadurch gekennzeichnet, dass** die Hohlwellen (3,4) Anlenkstellen für die Koppelgetriebe (5) aufweisen, wobei sich die Anlenkstellen der zweiten Hohlwelle (4) oberhalb der Anlenkstellen der ersten Hohlwelle (3) befinden.

5. Applikationsvorrichtung (1) nach einem der Ansprüche 1 bis 4, **dadurch gekennzeichnet, dass** jedes Koppelgetriebe (5) erste und zweite kürzere und erste und zweite längere, in Parallelogrammform miteinander gelenkig verbundene Koppelstangen (8a, 8b, 8c, 8d) aufweist, wobei die Applikationssegmente (6) jeweils auf den zweiten kürzeren Koppelstangen (8b) befestigt sind.

6. Applikationsvorrichtung (1) nach Anspruch 5, **dadurch gekennzeichnet, dass** in jener Stellung der Koppelgetriebe (5), in welcher ein Apex mit dem kleinstmöglichen Durchmesser erstellbar ist, die erste längere und die erste kürzere Koppelstange (8a, 8d) näher zur Drehachse (a) verlaufen als die zweite längere und die zweite kürzere Koppelstange (8b, 8c).

7. Applikationsvorrichtung (1) nach Anspruch 5 oder 6, **dadurch gekennzeichnet, dass** das zwischen der ersten kürzeren Koppelstange (8d) und der ersten längeren Koppelstange (8a) befindliche Gelenk (G₁) mit der ersten Hohlwelle (3) gelenkig verbunden ist.

8. Applikationsvorrichtung (1) nach einem der Ansprüche 5 bis 7, **dadurch gekennzeichnet, dass** die erste längere Koppelstange (8a) mit einer fünften Koppelstange (10) gelenkig verbunden ist, welche unterhalb der Hohlwellen (3, 4) mit dem Gestell (2) gelenkig verbunden ist.

9. Applikationsvorrichtung (1) nach einem der Ansprüche 5 bis 8, **dadurch gekennzeichnet, dass** die erste kürzere Koppelstange (8d) mit einer sechsten Koppelstange (9) gelenkig verbunden ist, welche mit der zweiten Hohlwelle (4) gelenkig verbunden ist.

10. Applikationsvorrichtung (1) nach einem der Ansprüche 5 bis 9, **dadurch gekennzeichnet, dass** die fünfte und die sechste Koppelstange (10, 9) jeweils etwa mittig an den jeweiligen Koppelstangen (8d, 8a) des parallelogrammförmigen Teiles des Koppelgetriebes (5) angelenkt ist.

## Claims

1. Application device (1) for producing an annular apex from a cut-to-length web of rubber compound and for applying the apex to an annular bead core positioned under the device, with a central axis of rotation (a) running in the vertical direction and with a cylindrical bearing surface with respect to this axis of rotation (a), comprising a multiplicity of application segments (6),
wherein the application segments (6) are component parts of coupler mechanisms (5), which are arranged rotationally symmetrical around the axis of rotation (a) of the application device (1) and can all be actuated simultaneously in such a way that the application segments (6) for applying the wound-on and spliced apex can be tilted by up to 90° in the direction of the bead core positioned under the device,
**characterized in that** the application segments (6) can also be actuated simultaneously in such a way that the diameter of the bearing surface formed by the application segments (6) can be changed within a diameter range,
wherein two, first and second hollow shafts (3, 4), an inner first hollow shaft (3) and an outer second hollow shaft (4), which are displaceable independently of one another on or with respect to the central axis of rotation (a) and are connected in an articulated manner to the coupler mechanisms, are provided for actuating the coupler mechanisms (5) .

2. Application device (1) according to Claim 1, **characterized in that**, for changing the diameter of the application segments (6), the outer, second hollow shaft (4) remains in its starting position with respect to the inner, first hollow shaft (3), which is moved by means of a drive (M₁).

3. Application device (1) according to Claim 1 or 2, **characterized in that** the central axis of rotation (a) is the axis of rotation of a rotatably arranged frame (2), on which the hollow shafts (3, 4) are displaceably mounted.

4. Application device (1) according to one of Claims 1 to 3, **characterized in that** the hollow shafts (3, 4) have points of articulation for the coupler mechanisms (5), wherein the points of articulation of the second hollow shaft (4) are above the points of articulation of the first hollow shaft (3).

5. Application device (1) according to one of Claims 1 to 4, **characterized in that** each coupler mechanism (5) has first and second shorter and first and second longer coupling rods (8a, 8b, 8c, 8d), connected to one another in an articulated manner in the form of a parallelogram, wherein the application segments (6) are respectively fastened on the second shorter coupling rods (8b).

6. Application device (1) according to Claim 5, **characterized in that**, in the position of the coupler mechanisms (5) in which an apex with the smallest possible diameter can be produced, the first longer and the first shorter coupling rod (8a, 8d run closer to the axis of rotation (a) than the second longer and the second shorter coupling rod (8b, 8c).

7. Application device (1) according to Claim 5 or 6, **characterized in that** the joint (G₁) located between the first shorter coupling rod (8d) and the first longer coupling rod (8a) is connected in an articulated manner to the first hollow shaft (3).

8. Application device (1) according to one of Claims 5 to 7, **characterized in that** the first longer coupling rod (8a) is connected in articulated manner to a fifth coupling rod (10), which is connected in an articulated manner to the frame (2) below the hollow shafts (3, 4).

9. Application device (1) according to one of Claims 5 to 8, **characterized in that** the first shorter coupling rod (8d) is connected in an articulated manner to a sixth coupling rod (9), which is connected in an articulated manner to the second hollow shaft (4) .

10. Application device (1) according to one of Claims 5 to 9, **characterized in that** the fifth and the sixth coupling rod (10, 9) is respectively articulated approximately midway on the respective coupling rods (8d, 8a) of the parallelogram-shaped part of the coupler mechanism (5).

## Revendications

1. Dispositif d'application (1) permettant de réaliser un bourrage sur tringle annulaire composé d'une bande de mélange de caoutchouc tronçonnée et d'appliquer le bourrage sur tringle sur une tringle annulaire positionnée au-dessous du dispositif, comprenant un axe de rotation central (a) s'étendant dans une direction verticale et une surface d'appui cylindrique par rapport audit axe de rotation (a) et composée d'une pluralité de segments d'application (6),
dans lequel les segments d'application (6) font partie d'engrenages couplés (5) disposés en symétrie de rotation autour de l'axe de rotation (a) du dispositif d'application (1) et qui peuvent tous être actionnés en même temps de telle sorte que les segments d'application (6) peuvent être inclinés jusqu'à 90° en direction de la tringle positionnée au-dessous du dispositif pour appliquer le bourrage sur tringle enroulé et épissé,
**caractérisé en ce que** les segments d'application (6) peuvent également être actionnés en même temps de telle sorte que le diamètre de la surface d'appui formée par les segments d'application (6) est variable dans une plage de diamètre,
dans lequel, pour actionner les engrenages couplés (5), deux premier et deuxième arbres creux (3, 4) coulissants indépendamment l'un de l'autre sur ou par rapport à l'axe de rotation central (a) sont prévus, notamment un premier arbre creux intérieur (3) et un deuxième arbre creux extérieur (4) qui sont reliés de manière articulée aux engrenages couplés.

2. Dispositif d'application (1) selon la revendication 1, **caractérisé en ce que** pour modifier le diamètre des segments d'application (6), le deuxième arbre creux extérieur (4) reste dans sa position initiale par rapport au premier arbre creux intérieur (3) qui est déplacé au moyen d'un entraînement (M₁),

3. Dispositif d'application (1) selon la revendication 1 ou 2, **caractérisé en ce que** l'axe de rotation central (a) est l'axe de rotation d'un bâti (2) disposé en rotation sur lequel les arbres creux (3, 4) sont montés coulissants.

4. Dispositif d'application (1) selon l'une quelconque des revendications 1 à 3, **caractérisé en ce que** les arbres creux (3, 4) présentent des points d'articulation pour les engrenages couplés (5), les points d'articulation du deuxième arbre creux (4) étant situés au-dessus des points d'articulation du premier arbre creux (3).

5. Dispositif d'application (1) selon l'une quelconque des revendications 1 à 4, **caractérisé en ce que** chaque engrenage couplé (5) présente des premières et deuxièmes barres de couplage plus courtes et des deuxièmes barres de couplage plus longues (8a, 8b, 8c, 8d), reliées de manière articulée les unes aux autres sous la forme d'un parallélogramme, les segments d'application (6) étant respectivement fixés sur les deuxièmes barres de couplage plus courtes (8b).

6. Dispositif d'application (1) selon la revendication 5, **caractérisé en ce que** dans chaque position des engrenages couplés (5) dans laquelle un bourrage sur tringle peut être réalisé avec le diamètre le plus petit possible, la première barre de couplage plus longue et la première barre de couplage plus courte (8a, 8d) s'étendant plus près de l'axe de rotation (a) que la deuxième barre de couplage plus longue et la deuxième barre de couplage plus courte (8b, 8c).

7. Dispositif d'application (1) selon la revendication 5 ou 6, **caractérisé en ce que** l'articulation (G₁) située entre la première barre de couplage plus courte (8d) et la première barre de couplage plus longue (8a) est reliée de manière articulée au premier arbre creux (3).

8. Dispositif d'application (1) selon l'une quelconque des revendications 5 à 7, **caractérisé en ce que** la première barre de couplage plus longue (8a) est reliée de manière articulée à une cinquième barre de couplage (10) qui est reliée de manière articulée au bâti (2) au-dessous des arbres creux (3, 4).

9. Dispositif d'application (1) selon l'une quelconque des revendications 5 à 8, **caractérisé en ce que** la première barre de couplage plus courte (8d) est reliée de manière articulée à une sixième barre de couplage (9) qui est reliée de manière articulée au deuxième arbre creux (4).

10. Dispositif d'application (1) selon l'une quelconque des revendications 5 à 9, **caractérisé en ce que** la cinquième et la sixième barre de couplage (10, 9) sont respectivement articulées environ au milieu sur les barres de couplage respectives (8d, 8a) de la partie en forme de parallélogramme de l'engrenage couplé (5).
